# EUROPEAN PATENT APPLICATION

(11) **EP 4 095 214 A1**
(43) Date of publication of application: **30.11.2022**
(21) Application number: 21175870.1
(22) Date of filing: 26.05.2021
(51) Int. Cl.: C09J 133/04

(54) **NEW WATER-BASED ADHESIVE FOR THE BONDING OF POROUS SUBSTRATES**

(71) Applicant: Bostik SA, 92700 Colombes (FR)
(72) Inventor: LI, Robin, Shanghai, 201108 (CN)
(74) Representative: Arkema Patent

(57) **Abstract**

Water-based adhesive composition comprising :
- from 10 % to 45 % by weight (expressed as dry content) of an acrylic emulsion (A) ; and
- from 0.009 % to 0.60 % by weight (expressed as dry content) of a water soluble polymer (B) consisting of a xanthan gum ;
said composition being obtainable by a process (P) comprising a first step (i) of dissolving polymer (B) into water, in the form of a powdered solid.

Use of said composition for the bonding of two substrates including at least one porous substrate.

## Description

The present invention relates to a new water-based adhesive composition and to its use for the bonding of at least one porous substrate, preferably a foam-like substrate.

The assembly, by means of adhesive compositions, of porous substrates (including foam-like substrates) with porous or non-porous substrates (including for instance metallic substrates) is currently performed in various industries, including the transportation industry.

For instance, in the car, truck and shipbuilding industry, adhesive compositions are used to bond high elastic foams to metallic substrates for the assembly of seats or armrests, or to bond carpet onto the floor of the vehicle. Other applications within the automotive industry also include headliner adhesive lamination in the car's interior.

High elastic foams, such as melamine foams, are also used as isolation material, for instance in the train industry. As another example of assembly of a porous substrate with a metallic substrate, one may cite therefore the assembly of the vent pipes, which are implemented for the air transfer and exchange from the air conditioner systems developed for high-speed trains. Such vent pipes have a rectangular cross-section and extend throughout the train. They may be assembled by bonding insulating panels made of melamine foams on metallic rigid frames, made for instance of aluminium.

In the past, the market of the adhesives directed to the assembly of such substrates for the transportation industry has been dominated by adhesives dissolved or dispersed in organic solvents, such as solvent based chlorinate rubber. However, there has been a desire to shift from organic, solvent-based adhesive compositions to aqueous-based or aqueous-dispersed adhesive compositions for environmental reasons.

Water-based adhesive compositions currently used in the transportation industry are mainly water-based emulsions (or dispersions). Water-based emulsions have the advantage that they can be applied at room temperature and that the water carrier provides excellent penetration into the porous substrate, which helps create the high strength bond necessary to hold the assembly of the porous substrate with the non-porous substrate. They are usually applied on one or two of the substrates to be assembled, by high-speed continuous processes, which implement such equipment as spray gun.

In order to meet the constraints of these high-speed continuous processes, these water-based adhesive compositions are also expected to have a fast setting speed, in other terms to have the ability, immediately after their application and formation of a two substrates assembly, to set a bond rapidly and to maintain this bond after a short application of pressure. This "fast setting" property is also designated by the terms of "wet tack" or "fast bonding".

In addition to this fast bonding initial property, water-based adhesive compositions are also expected to create, after a longer period, typically of one day, a strong final bond between the two substrates, resulting in an adhesive joint between said substrates, which possesses a strong cohesive strength.

Water-based adhesive compositions known in the transportation industry to impart adequate fast bonding properties are generally based on emulsions of polychloroprene, also designated as chloroprene rubber emulsions.

European patent application 3447102 from Bostik discloses a chloroprene modified acrylic emulsion which comprises a polychloroprene and an acrylic polymer which are both forming an interpenetrating polymer network (or IPN), namely a polychloroprene network intertwined on a molecular scale with said acrylic polymer.

However, the general inherent issue with chlorine-based polymers is the adverse consequences, which result from their exposure to fire or high temperatures.

Indeed, there is the risk that at high temperature such chlorine-based polymers decompose, with the formation of gases such as hydrogen chloride and carbon dioxide, which, even in tiny doses, are hazardous to humans and other animals. In addition, the hydrogen chloride is highly corrosive and its contact with the connections and various components of electronic equipment can create much damage.

This issue is all the more acute in transportations means like cars, trucks or trains in that the assemblies which are implemented therein and include chlorine-based adhesive joints, are located in contained (or confined) spaces with air flow restrictions and/or limited exit possibilities during a potential fire. Such a location increases potential contacts with humans and electronic equipment in case of exposure to fire or high temperatures.

Therefore, in the constant move towards improving the quality and safety of the adhesives proposed to customers in the transportation industry, there is the need to decrease such a risk by avoiding the use of chlorine-based polymers.

The present invention aims at solving this need.

Another aim of the present invention is to propose a water-based adhesive composition, which imparts fast bonding to porous, and non porous substrates.

Another aim of the present invention is to propose a water-based adhesive composition which, after being applied on at least one of two substrates including a porous substrate, results into an assembly with an adhesive joint of a strong cohesive strength.

Another aim of the present invention is to propose a water-based adhesive composition with rheological properties suitable for being applied by means of the application devices that are implemented in the transportation industry, in particular spraying devices.

It has now been found that these aims can be achieved, in whole or in part, by means of the water-based adhesive composition forming the subject matter of the present invention.

The present invention relates first to a water-based adhesive composition comprising, on the basis of its total weight:
- from 10 % to 45 % by weight (expressed as dry content) of an acrylic emulsion (A) ; and
- from 0.009 % to 0.60 % by weight (expressed as dry content) of a water soluble polymer (B) consisting of a xanthan gum ;
said composition being obtainable by a process (P) comprising a first step (i) of dissolving polymer (B) into water, in the form of a powdered solid, so as to obtain a composition (S) consisting essentially of a water solution of polymer (B).

The choice of polymer (B), as a specific thickening agent, as well as its specific process of incorporation into the acrylic emulsion (A), makes possible to obtain a homogenous and stable water-based adhesive composition, which presents a viscosity range suited to the devices, such as spraying equipment, which are operated in the transportation industries to apply adhesives to substrates. In addition, said water-based adhesive composition also provides the wet tack (or fast bonding) and high strength adhesive joint required properties when it is applied on a porous substrate, in particular a foam-like substrate. Advantageously, the water-based adhesive composition according to the invention is an aqueous dispersion of (A) and (B).

In the water-based adhesive composition according to the invention, water is brought by the acrylic emulsion (A), with optional addition of water. Indeed, depending on the water dilution of (A) and (S), one may be lead to adding water for obtaining the desired active material concentration expressed as dry content.

According to a preferred embodiment, the viscosity at room temperature of the water-based adhesive composition according to the invention is comprised in a range from 1200 to 7000 mPa.s, preferably from 1500 to 6000 mPa.s. The viscosity is measured with a Brookfield RVT viscometer equipped with a 4 # spindle rotating at 20 rotations per minute. Unless otherwise stated, all viscosities mentioned in the present text are measured by the same method.

According to an embodiment, the acrylic emulsion (A) comprised in the water-based adhesive composition, is an aqueous dispersion comprising at least one (co)polymer (C) obtained starting from one or more monomers selected in the group comprising, and more preferably consisting of : meth(acrylic) acid, meth(acrylate) esters, styrene and acrylonitrile. By the abbreviated term "meth(acrylic) acid", it is intended acrylic acid and methacrylic acid. Similarly "meth(acrylate) esters" means both acrylate esters and methacrylate esters. The meth(acrylate) esters are usually selected among the C₁-C₁₀ alkyl, C₁-C₁₀ hydroxyalkyl, and C₃-C₁₀ cycloalkyl esters.

According to a preferred embodiment, the acrylic emulsion (A) comprised in the water-based adhesive composition, is an aqueous dispersion exempt from polychloroprene.

According to a more preferred embodiment, the acrylic emulsion (A) comprised in the water-based adhesive composition, comprises a copolymer of styrene and one or more (meth)acrylates.

Acrylic emulsions (A) can be prepared from the co-monomers using standard processes known to one skilled in the art.

Acrylic emulsions (A) are also widely available commercially. ADWEL^{®} 1336 from the company WANHUA is an example of such a product, being an aqueous dispersion of a copolymer of styrene and methyl acrylate, methyl methacrylate, n-butyl acrylate and 2-ethylhexyl acrylate, with:
- 48 % by weight in dry extract (based on its total weight),
- a pH of 3-7 and,
- a viscosity at room temperature of about 1000 mPa.s.

According to an embodiment, the water-based adhesive composition consists of the acrylic emulsion (A) and the water-soluble polymer (B). In that case, the content of the acrylic emulsion (A) (expressed as dry content) in the water-based adhesive composition is preferably comprised in the range going from 40 % to 45 % by weight, on the basis of the total weight of the water-based adhesive composition.

According to another embodiment, the content of the acrylic emulsion (A) (expressed as dry content) in the water-based adhesive composition according to the invention, is comprised in the range going from 20 % to 35 % by weight, on the basis of the total weight of the water-based adhesive composition.

In addition to the acrylic emulsion (A), the water-based adhesive composition according to the invention comprises, as a thickening agent, a water soluble polymer (B) consisting of a xanthan gum.

By xanthan gum is meant a class of exocellular polysaccharides made by the heteropolysaccharide producing bacterium Xanthomonas Campestris, and other bacteria of the Genus Xanthomonas, in the whole-culture fermentation of a medium comprising a fermentable carbohydrate, a nitrogen source, and other appropriate nutrients (see e.g., US Patents 3,433,708 and 4,316,012). This polysaccharide is believed to have a main chain consisting of a linear backbone of 1,4-linked β-D-glucose and side chains of two mannose and one glucuronic acid. Xanthan gum is widely available commercially in the form of a powdered solid. CS^{®} from the Swiss company JUNGBUNZLAUER AG is an example of such a xanthan gum.

According to a more preferred embodiment, the content of polymer (B), expressed as dry content, in the water-based adhesive composition is from 0.20 % to 0.55 % by weight, on the basis of the total weight of the water-based adhesive composition.

The water-based adhesive composition according to the invention is advantageously obtained by a process (P) which comprises a first step (i) of dissolving the water soluble polymer (B) (in the form of a powdered solid) into water, so as to obtain a composition (S) consisting essentially of a water solution of polymer (B).

The composition resulting from the dissolution of the water soluble polymer (B) into water consists essentially of a water solution (S) of polymer (B), meaning that only minor quantities of other ingredients may be comprised such as a biocide with a maximum quantity of 1 % by weight in solution (S) and a pH adjuster like citric acid with a maximum quantity of 1 % by weight in solution (S), said percentages by weight being expressed on the basis of the total weight of (S).

It has been found, surprisingly, that in contrast with the direct incorporation of (B) in the form of a powdered solid into (A), the first step (i) of said process advantageously provides a final composition which is homogeneous, and, in particular, substantially exempt from a gel. In addition, said final composition exhibits a Brookfield viscosity falling in the range from 1200 to7000 mPa.s, which is quite adapted to the devices, such as spraying equipment, which are operated in the transportation industries to apply adhesives to substrates.

Dissolution of polymer (B) into water is preferably achieved at room temperature.

According to a preferred embodiment, the content of the composition (S) in polymer (B) (expressed as dry content) is comprised in the range from 0.5 % to 5 % by weight, on the basis of the total weight of (S), preferably in the range from 1 % to 4 % by weight, and, even more preferably, in the range from 2 % to 4 % by weight.

The process (P) also comprises after step (i) a step (ii) of incorporating (S) into (A). The relative weight quantities of the water solution (S) and emulsion (A) are such as to provide a content of polymer (B) into the final water-based adhesive composition, which lays in the desired range from 0.009 % to 0.60 % by weight (expressed as dry content).

The water-based adhesive composition according to the invention may also comprise usual additives in the field of the water-based adhesive compositions, which are currently implemented in the transportation industries. Among such additives, one may cite a quantity of 0.1 to 0.4 % by weight of a biocide (fungicide or bactericide) in order to protect the composition against attacks, in particular bacterial attacks, or a quantity of 0.1 to 0.3 % by weight of an antifoaming agent in order to reduce the formation of foams during the implementation of the adhesive composition. Other optional additives include wetting agent or fillers.

The present invention also relates to the use of the water-based adhesive composition such as defined above, for the bonding of two substrates, including at least one porous substrate.

The porous substrate may be, in particular, selected among cellulose based substrate such as cotton and wool, carbon fiber, rock wool, foam-like substrates, preferably high elastic foam such as melamine.

Preferably, the two substrates due to be bonded include one non-porous substrate, in addition to the porous substrate.

The non-porous substrate may be, in particular, selected among metallic substrates like aluminium, including coated aluminium, steel, and plastic materials like Acrylonitrile Butadiene Styrene (ABS), PolyCarbonate (PC) and including Fiber Reinforced Plastics (FRP).

According to a preferred embodiment, the water-based adhesive composition is applied to at least one surface of the two substrates due to be bonded, preferably on the porous substrate, by a conventional equipment such as spraying equipment, coating equipment, brush.

According to a more preferred embodiment, the water-based adhesive composition is applied on said surface in an amount that depends on substrates and specific requirements varying in the range from 50 to 500 g/m², preferably in the range from 100 to 200 g/m²

The water-based adhesive composition such as defined above advantageously exhibits an open time between 5 and 30 minutes, making it appropriate for manual application.

The open time OT of the water-based adhesive is defined as the period of time which starts from its application on at least one surface of two substrates due to be bonded, including a porous substrate and preferably a non-porous substrate, until said substrates are contacted and pressed, and which cannot be exceeded in order to obtain a united and strong assembly.

Beyond the OT, the desired properties of fast speed and strong cohesive strength are no longer ensured, mainly because most of the water-based adhesive has dried. OT is also influenced by the ambient climatic conditions of the application (humidity, temperature) but also depends, for example, on the thickness of the adhesive joint and of the substrates to be assembled.

Generally, it is measured by joining two components at different times and by seeing from what moment a significant loss of adhesion properties is observed.

The use of the water-based adhesive composition according to the invention is advantageously implemented in the sofa related industry, the general assembly industry, and the transportation industry, preferably for the manufacturing of equipment intended for all kinds of vehicles, including cars, trucks, buses, trains and ships.

The following examples are given purely to illustrate the invention, but should not be interpreted as limiting its scope.

### Example A (reference) :

Water solutions of xanthan gum were prepared by dissolving (at room temperature) xanthan gum powder into water, in order to obtain the concentrations pointed out here-below :

**Table 1**

| | Water solution (S) of xanthan gum | | |
|---|---|---|---|
| xanthan gum concentration (% by weight expressed as dry content) | 2.5 | 3 | 4 |

### Example 1 : water-based adhesive dispersion comprising ADWEL^{®} 1336 and xanthan gum, prepared starting from the xanthan gum water solution (S) at 2.5 % :

100 g of ADWEL^{®} 1336 were added to a plastic cup and stirred at a speed of 600 rpm with an appropriate mixer.

An appropriate amount (10 g) of the water solution (S) with 2.5 % xanthan gum (prepared according to example A) was then gradually introduced into the plastic cup, so as to obtain a concentration in xanthan gum in the final adhesive dispersion (expressed in dry content) of 0.22 % by weight. During the introduction of (S), an increase of the viscosity was visually observed.

After complete introduction of (S), a homogeneous adhesive water-based dispersion was obtained in which the concentration of ADWEL^{®} 1336, expressed as dry content and based on the total weight of said adhesive dispersion, was 44 % by weight.

Its viscosity at room temperature was measured (with a Brookfield RVT viscometer equipped with a n°4 spindle rotating at 20 rotations per minute) and found to be 1500-2000 mPa.s.

Corresponding data is shown in Table 2 below.

**Table 2**

| Ingredient | Content in % by weight | | | | | | |
|---|---|---|---|---|---|---|---|
| | Ex. 1 | Ex. 2 | Ex. 3 | Ex. 4 | Ex. 5 | Ex. 6 | Ex. 7 (comp.) |
| ADWEL^{®} 1336 (% by weight expressed as dry content) | 44 | 42 | 44 | 42 | 44 | 42 | 40 |
| Xanthan gum (% by weight expressed as dry content) | 0.22 | 0.33 | 0.27 | 0.39 | 0.36 | 0.52 | 0.67 |
| | | | | | | | |
| Xanthan gum content in water solution (S) (% by weight expressed as dry content) | 2.5 | 2.5 | 3 | 3 | 4 | 4 | 4 |
| | | | | | | | |
| Brookfield viscosity of the adhesive dispersion (mPa.s) | 1500-2000 | 2000-2500 | 2000-2500 | 2500-3000 | 3000-4000 | 4000-6000 | 6000-8000 |

This adhesive dispersion was submitted to the wet tack test described here-below.

### Wet tack test:

The wet tack property was qualitatively assessed by the following test.

The substrate to be used for this test was a polyurethane (PU) foam strip (10 cm x 5 cm x 4 mm).

The water-based adhesive dispersion of exemple 1 was coated by spray in an amount of 80 g/m² on the inner side of the strip.

10 seconds after this coating, the strip was bent manually by its outer side, in such a way that the inner side of its 2 ends were pressed against each other during 3 seconds. Then, manual pressure was released.

The 2 ends of the strip remained bonded, pointing at a good wet tack (or fast setting) property.

### Examples 2-5 :

Example 1 was repeated :
- using the water solution (S) of xanthan gum pointed out in Table 2, and
- adjusting the amount of said solution (S) introduced into the plastic cup, in order to obtain the concentrations in ADWEL^{®} 1336 and xanthan gum (both by weight expressed as dry content, on the basis of the total weight of the water-based adhesive dispersion) which are pointed out in Table 2.

A homogeneous adhesive dispersion was also obtained with the Brookfield viscosity pointed out in Table 2.

The wet tack test gave the same result, also pointing at a good wet tack (or fast setting) property.

### Example 6 :

Exemple 1 was repeated with the amount of solution (S) and the concentrations of ADWEL^{®} 1336 and xanthan gum shown in Table 2.

A homogeneous adhesive dispersion was also obtained with the Brookfield viscosity pointed out in Table 2.

The wet tack test gave the same result, also pointing at a good wet tack (or fast setting) property.

This adhesive dispersion was submitted to the bonding test described here-below.

### Bonding test :

The substrates used for this test were:
- a melamine foam in the shape of a block (10 cm x 10 cm x 6 cm), and
- an aluminium plate (10 cm x 10 cm x 1.5 mm).

### A)

The aluminium plate was first slightly curved along its median, in order to form, on its inner side, a dihedral angle of about 150°.

The adhesive dispersion was coated by spraying on the inner side of the aluminium plate and on a square face of the melamine block, in an amount corresponding to 150 g/m².

After a period of time To of 5 minutes following coating, the coated face of the melamine block was manually contacted with some pressure against the coated inner side of the aluminium plate.

After a few seconds, manual pressure was released, this initial aspect of the assembly was observed as to whether the 2 substrates remained bonded. Actually, they did remain bonded and this result was noted OK in Table 3, pointing towards an appropriate initial tack.

The resulting assembly was allowed to stay during one day at room temperature. Then the final strength of the adhesive joint in the assembly was assessed by manually peeling away the 2 bonded substrates.

It was observed that about 90 % of the joined surface of the block of melamine foam was teared away, corresponding to a Substrate Failure (SF). This observation was noted in Table 3 below. Such an observation points towards a strong cohesive strength of the adhesive joint in the assembly of the 2 substrates.

**Table 3**

| | | | | |
|---|---|---|---|---|
| Period of time T₀ (minutes) | 5 | 10 | 15 | 30 |
| Initial aspect of the assembly | OK | OK | OK | Not OK |
| Strength of the adhesive joint after 1 day | 90 % SF | 80 % SF | 80 % SF | - |

### B)

The various steps described in preceding § A) were reproduced on fresh samples of the 2 substrates, changing only the period of time To between coating the adhesive dispersion on the 2 substrates and bringing them into contact, from 5 minutes to the value pointed out in Table 3.

The initial aspect of the assembly was observed and noted in Table 3.

The final strength of the adhesive joint in the assembly after 1 day was also observed and noted in Table 3.

The results of Table 3 show that an open time falling in the range from 5 minutes to 20 minutes makes it possible to obtain a strong cohesive strength of the adhesive joint in the assembly of the two substrates, with an appropriate initial tack.

### Example 7 (comparative) :

Exemple 1 was repeated with the amount of solution (S) and the concentrations of ADWEL^{®} 1336 and xanthan gum shown in Table 2.

A homogeneous adhesive dispersion was also obtained with the Brookfield viscosity pointed out in Table 2.

However, during the reproduction of wet tack test, the 2 ends of the strip debonded after manual pressure was released, pointing at an inappropriate wet tack (or fast setting) property.

### Example 8 (comparative) :

Example 1 was repeated, except that xanthan gum was introduced directly as a powder into ADWEL^{®} 1336 in such an amount as to target a concentration (based on the total weight of the composition) of 0.22%by weight, without implementation of the water solution (S).

Immediate formation of a gel was observed and no homogeneous adhesive dispersion could be obtained.

## Claims

1. Water-based adhesive composition comprising, on the basis of its total weight:
- from 10 % to 45 % by weight (expressed as dry content) of an acrylic emulsion (A) ; and
- from 0.009 % to 0.60 % by weight (expressed as dry content) of a water soluble polymer (B) consisting of a xanthan gum ;
said composition being obtainable by a process (P) comprising a first step (i) of dissolving polymer (B) into water, in the form of a powdered solid, so as to obtain a composition (S) consisting essentially of a water solution of polymer (B).

2. Water-based adhesive composition according to claim 1, **characterized in that** its viscosity at room temperature is comprised in a range from 1200 to 7000 mPa.s.

3. Water-based adhesive composition according to either one of claims 1 or 2, **characterized in that** the acrylic emulsion (A) is an aqueous dispersion comprising at least one (co)polymer (C) obtained starting from one or more monomers selected in the group comprising meth(acrylic) acid, meth(acrylate) esters, styrene and acrylonitrile.

4. Water-based adhesive composition according to anyone of claims 1 to 3, **characterized in that** the acrylic emulsion (A) is an aqueous dispersion exempt from polychloroprene.

5. Water-based adhesive composition according to anyone of claims 1 to 4, **characterized in that** the acrylic emulsion (A) comprises a copolymer of styrene and one or more (meth)acrylates.

6. Water-based adhesive composition according to anyone of claims 1 to 5, **characterized in that** the content of the acrylic emulsion (A) is comprised in the range going from 40 % to 45 % by weight.

7. Water-based adhesive composition according to anyone of claims 1 to 5, **characterized in that** the content of the acrylic emulsion (A) is comprised in the range going from 20 % to 35 % by weight.

8. Water-based adhesive composition according to anyone of claims 1 to 7, **characterized in that** the content of polymer (B) is from 0.20 % to 0.55 % by weight.

9. Water-based adhesive composition according to anyone of claims 1 to 8, **characterized in that** the content of the composition (S) in polymer (B) (expressed as dry content) is comprised in the range from 0.5 % to 5 % by weight, on the basis of the total weight of (S), preferably in the range from 1 % to 4 % by weight.

10. Use of the water-based adhesive composition such as defined in anyone of claims 1 to 9, for the bonding of two substrates including at least one porous substrate.

11. Use according to claim 10, **characterized in that** the porous substrate is selected among cellulose based substrate, carbon fiber, rock wool and foam-like substrates.

12. Use according to either one of claims 10 or 11, **characterized in that** the two substrates due to be bonded include one non-porous substrate, in addition to the porous substrate.

13. Use according to claim 12, **characterized in that** the non-porous substrate is selected among metallic substrates and plastic materials.

14. Use according to any one of claims 10 to 13, **characterized in that** the water-based adhesive composition is applied to at least one surface of the two substrates due to be bonded in an amount varying in the range from 50 to 500 g/m².

15. Use according to any one of claims 10 to 14 in the sofa related industry, the general assembly industry, and the transportation industry.
